Europäisches Patentamt

European Patent Office

Office européen des brevets

(11) Veröffentlichungsnummer: **0 115 578**
A1

# (12) EUROPÄISCHE PATENTANMELDUNG

(21) Anmeldenummer: 83111130.7

(22) Anmeldetag: 08.11.83

(51) Int. Cl.³: **B 23 K 26/00**

(30) Priorität: 03.02.83 DE 3303567

(43) Veröffentlichungstag der Anmeldung: 15.08.84
Patentblatt 84/33

(84) Benannte Vertragsstaaten: **CH DE FR GB IT LI**

(71) Anmelder: **Reaktorwartungsdienst und Apparatebau GmbH, Eleonorenstrasse 1, D-5170 Jülich (DE)**

(72) Erfinder: **Vallentin, Klaus, Eleonorenstrasse 1, D-5170 Jülich (DE)**

(74) Vertreter: **Liermann, Manfred, Josef-Schregel-Strasse 19, D-5160 Düren (DE)**

(54) **Verfahren zur Herstellung eines Metallbalges.**

(57) Beispielsweise in der Hochvakuumtechnik oder in der Beschleunigungstechnik benötigt man Metallbälge zur Schaffung von beispielsweise beweglichen, aber vakuumdichten, Durchführungen und Verbindungen. Bisher werden hierzu Metallamellen durch Schutzgasschweißen an ihrem inneren und äußeren Umfang miteinander verbunden. Dieses Verfahren ist teuer und weist eine Reihe technologischer Nachteile auf. Diese Nachteile werden nach der Erfindung dadurch behoben, daß jede Schweißnaht durch Laserstrahlschweißen mittels eines gepulsten Laserstrahls erzeugt wird, wobei Pulsfolge und Vorschubgeschwindigkeit des Laserstrahls entlang der Schweißnaht so aufeinander abgestimmt sind, daß die Schweißpunkte sich genügend weit überlappen, um eine fortlaufende vakuumdichte Schweißnaht zu bilden.

## Verfahren zur Herstellung eines Metallbalges

Die Erfindung betrifft ein Verfahren zur Herstellung eines Metallbalges, bestehend aus Metallamellen, die an ihrem inneren und äußeren Umfang aneinander liegen und dort miteinander verschweißt werden.

Verfahren der o.gen. Art zur Herstellung von Metallbälgen sind im Stand der Technik gut bekannt. Es werden hierzu die einzelnen Metallamellen an ihrem inneren und äußeren Umfang aneinander gelegt und über Schutzgasschweißverfahren miteinander verschweißt.

An sich haben sich die solcherart gefertigten Metallbälge im täglichen Einsatz in der Vakuumtechnik beispielsweise und in der Beschleunigertechnik recht gut bewährt; jedoch sind die Kosten zur Herstellung dieser Metallbälge relativ hoch, weil einmal das Schutzgasschweißen an sich wegen des apparativen Aufbaus und der Handhabung relativ teuer ist und weil andererseits die Metallamellen selbst relativ stabil sein müssen, also dick ausgebildet sein müssen, damit sie genügend dicht gegen Leckage an den Rändern verschweißt werden können. Dies aber bedeutet weiterhin, daß bei einer vorgegebenen Beweglichkeit zur Erreichung dieser Beweglichkeit immer relativ große Metallamellen benötigt werden, weil ja die zwangsweise relativ dicken Metallamellen dann, wenn sie einen zu kleinen Ringquerschnitt aufweisen, zu steif in ihrer Beweglichkeit sind und außerdem dann durch ihre Bewegung in der Schweißnaht zu hohe Spannungen entstehen, wodurch der Dauerbruch solcher Metallbälge begünstigt wird.

Da während des Schutzgasschweißens eine relativ hohe Energie in die Schweißnaht eingebracht wird, tritt auch in weiten Bereichen eine Gefügeumwandlung des verschweißten Materials im Schweißbereich ein, die unerwünscht ist.

Weiterhin kann durch das bekannte und übliche Schutzgasschweißen das Material der Metallamellen magnetisch oder
magnetisierbar werden, was ebenfalls unerwünscht ist.

Der Erfindung liegt daher die Aufgabe zugrunde, ein Verfahren zur Herstellung von Metallbälgen vorzuschlagen,
mit welchem es möglich wird, dünnere Metallamellen einzusetzen zur Steigerung der Beweglichkeit und zur Verringerung
der für eine Bewegung notwendigen Kräfte, wobei die verschweißten dünneren Metallamellen dennoch vakuumdicht sein
sollen. Außerdem sollen die Spannungen im Schweißbereich
möglichst gering sein, um eine Verbesserung der Dauerbruchsicherheit zu erreichen. Weiterhin soll vermieden werden,
daß das Material magnetisch, oder durch die Schweißung
magnetisierbar wird.

Erfindungsgemäß ist diese Aufgabe bei einem Verfahren der
eingangs beschriebenen Art dadurch gelöst, daß jede Schweißnaht durch Laserstrahlschweißen mittels eines gepulsten
Laserstrahls erzeugt wird, wobei Pulsfolge und Vorschubgeschwindigkeit des Laserstrahls entlang der Schweißnaht
so aufeinander abgestimmt sind, daß die Schweißpunkte sich
genügend weit überlappen um eine fortlaufende, vakuumdichte
Schweißnaht zu bilden.

Laserstrahlschweißen der beschriebenen Art macht es möglich
eine Schweißverbindung an den Rändern der aneinander anliegenden Lamellen von außerordentlich geringer Eindringtiefe zu schaffen, mit der dennoch eine vollständige und
vollständig dichte Gefügeverbindung erreicht werden kann.
Gleichzeitig ist zur Herstellung der Schweißnaht nur eine
gegenüber herkömmlichen Verfahren wesentlich geringere
Energiezufuhr pro Naht erforderlich. Hierdurch wird die
thermische Materialbelastung stark reduziert, wodurch die
Gefügeumwandlung im Schweißbereich minimiert werden kann.

0115578

Das erfindungsgemäß zur Anwendung kommende Laserstrahlschweißverfahren vermeidet gleichzeitig eine Magnetisierung
des Materials und das Material wird durch das genannte
Schweißverfahren auch nicht magnetisierbar.

Die genannten Vorteile im Bereich der Schweißnaht erlauben
den Einsatz von Metallamellen die sowohl in ihrer Dicke
als auch in ihren Querschnittsabmessungen geringer sein
können, als herkömmliche Lamellen. Hierdurch wird der gesamte Metallbalg wesentlich weicher und beweglicher. Zur
Erreichung einer bestimmten Federkennlinie des Metallbalges
ist ein wesentlich günstigeres Verhältnis von Innendurchmesser zu Außendurchmesser des Metallbalges möglich. Außerdem wird aufgrund der günstigeren Abmessungen der Lamellen
eine kürzere Bauart bei sonst gleichen mechanischen Eigenschaften erreicht.

Da das Laserstrahlschweißen sicherer beherrschbar ist,
sinkt auch die Ausschußquote bei der Herstellung solcher
Metallbälge.

Die erfindungsgemäße Anwendung des Laserstrahlschweißens
mittels eines gepulsten Laserstrahls bei der Herstellung
von Metallbälgen führt somit insgesamt zu einem überraschenden Fortschritt in der Herstellung solcher in großer Zahl
benötigter Metallbälge. Es gelingt nunmehr Metallbälge
herzustellen mit wesentlich verbesserten Dauerbrucheigenschaften, die bei gleicher Auslenkbarkeit eine wesentlich
flachere Kennlinie aufweisen, also wesentlich weicher sind,
und dennoch sowohl in ihren Gesamtabmessungen als auch
in ihrem Verhältnis von Innendurchmesser zu Außendurchmesser
wesentlich günstiger proportioniert sind als herkömmliche
Metallbälge. Außerdem wird die unangenehme Magnetisierung,
oder die Bereitschaft des Materials magnetisiert zu werden,
vermieden.

Insgesamt kann gesagt werden, daß in nicht unerheblichem Umfang Werkstoff und Energie eingespart wird und dennoch ein hochvakuumdichter, dauerbruchsicherer, nicht magnetisierbarer Metallbalg geschaffen wird, der trotz verringerter Abmessungen gleiche Verstellmöglichkeiten bei gleichzeitig geringerem Kraftaufwand bietet.

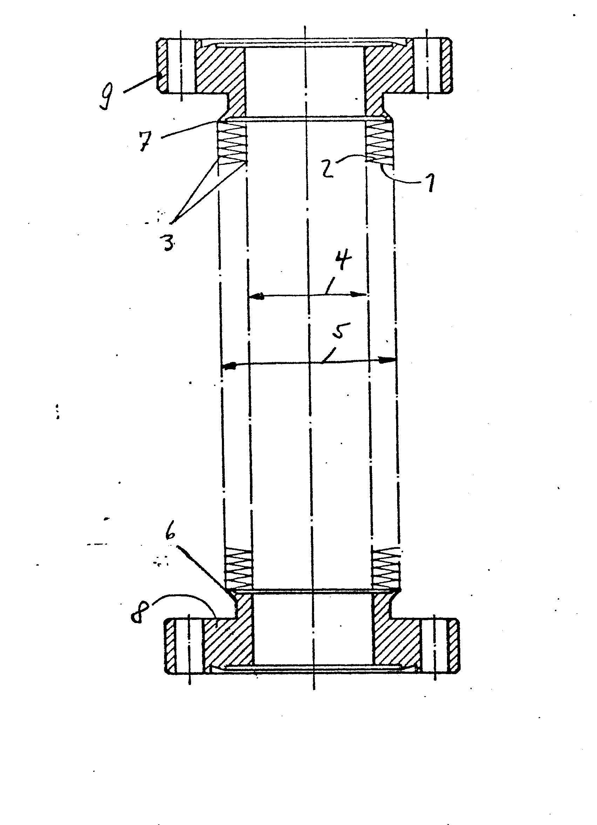

Die beigefügte Zeichnung zeigt einen solchen typischen Metallbalg, der aus den Lamellen 1 und 2 zusammengesetzt ist, die an ihren Rändern 3 aneinander liegen und dort in der beschriebenen Art miteinander verschweißt sind. Wie bereits aus der Zeichnung ersichtlich, kann hierbei das Verhältnis von Innendurchmesser 4 zu Außendurchmesser 5 außerordentlich günstig gehalten werden.

Im Endbereich 6 bzw. 7 ist der gesamte Faltenbalg jeweils mit der letzten Lamelle mit einem Anschlußflansch 8 bzw. 9 in gleicher Weise verschweißt. Diese beiden Anschlußflansche 8 und 9 verbinden die Teile miteinander, die in gewünschter Weise beweglich und dicht gegenüber der Umgebung miteinander verbunden sein müssen und es ermöglicht der Faltenbalg beispielsweise die Durchführung eines Verstellgerätes durch den Innendurchmesser 4.

Insgesamt gelingt es erstmals kostengünstiger als bisher Metallbälge herzustellen mit wesentlich verbesserten mechanischen und physikalischen Eigenschaften.

## Liste der verwendeten Bezugszeichen

1 Lamelle

2 Lamelle

3 Ränder

4 Innendurchmesser

5 Außendurchmesser

6 Endbereich

7 Endbereich

8 Anschlußflansch

9 Anschlußflansch

*Schutzanspruch*

*Verfahren zur Herstellung eines Metallbalges bestehend aus Metallamellen, die an ihrem inneren und äußeren Umfang je aneinander liegen und dort miteinander verschweißt werden, dadurch gekennzeichnet, daß jede Schweißnaht durch Laserstrahlschweißen mittels eines gepulsten Laserstrahls erzeugt wird, wobei Pulsfolge und Vorschubgeschwindigkeit des Laserstrahls entlang der Schweißnaht so aufeinander abgestimmt sind, daß die Schweißpunkte sich genügend weit überlappen um eine fortlaufende vakuumdichte Schweißnaht zu bilden.*

0115578

**Europäisches Patentamt**

| | EINSCHLÄGIGE DOKUMENTE | | EP 83111130.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - A1 - 2 922 563</u> (UNITED TECHNOLOGIES CORP.)<br><br>* Gesamt *<br><br>-- | | B 23 K 26/00 |
| A | <u>GB - A - 1 567 339</u> (SAURIN)<br><br>* Fig. 1 *<br><br>---- | | |

| | RECHERCHIERTE SACHGEBIETE (Int. Cl. ³) |
|---|---|
| | B 23 K 26/00<br>B 23 K 31/00 |

Der vorliegende Recherchenbericht wurde für alle Patentansprüche erstellt.

| Recherchenort | Abschlußdatum der Recherche | Prüfer |
|---|---|---|
| WIEN | 11-04-1984 | BENCZE |